# EUROPEAN PATENT APPLICATION

(11) **EP 3 159 730 A1**
(43) Date of publication of application: **26.04.2017**
(21) Application number: 16179265.0
(22) Date of filing: 13.07.2016
(51) Int. Cl.: G02B 27/01, H04N 5/74

(54) **HEAD-MOUNTED DISPLAY**

(30) Priority: 23.10.2015 TW 104134835
(71) Applicant: Coretronic Corporation, Hsin-Chu 300 (TW)
(72) Inventor: HSIEH, Chi-Tang, Hsin-Chu 300 (TW); WEI, Chung-Ting, 300 Hsin-Chu 300 (TW); WANG, Hsiang-Hua, Hsin-Chu 300 (TW)
(74) Representative: Ter Meer Steinmeister & Partner

(57) **Abstract**

A head-mounted display including a device body, an assembly and a projection device is provided. The assembly includes a reflective surface, and is pivoted on the device body. The projection device includes a liquid crystal lens element, and is disposed inside the device body. The projection device is used to project an image beam on the assembly, and the assembly reflects the image beam to a projection target. The projection device uses the liquid crystal lens element to calibrate an aberration generated from the reflective surface of the assembly.

## Description

### CROSS-REFERENCE TO RELATED APPLICATION

This application claims the priority benefit of Taiwan application serial no. 104134835, filed on October 23, 2015. The entirety of the above-mentioned patent application is hereby incorporated by reference herein and made a part of this specification.

### BACKGROUND OF THE INVENTION

### Field of the Invention

The invention relates to a display, and particularly relates to a head-mounted display.

### Description of Related Art

In recent years, various head-mounted displays are continually studied and developed. Particularly, along with the rise of heavy motorcycle sport, in case that the heavy motorcycle is in a high-speed state, when a rider of the motorcycle moves away his eyesight from the place ahead to view information displayed on a dashboard of the heavy motorcycle, it may cause a safety problem. Therefore, by using a head-mounted display to display the information on the dashboard in collaboration with a conventional safety helmet, the aforementioned safety problem can be resolved.

Generally, in the safety helmet having a head-mounted display, an optical element is disposed near human eyes to display image content, or another display (for example, an image combiner) is used to display the image content. However, such arrangement may cause interference on driver's sight line, and in case of a violent shock or collision, the driver's eyes are probably injured.

Therefore, a safer approach is to take a transparent visor on the safety helmet as a display screen to display the image content. Although the above method may resolve the aforementioned safety problem, the head-mounted display generally requires a complicated lens module or an off-axis optical system to calibrate an optical aberration, so as to maintain certain image quality. Moreover, the complicated lens module or the off-axis optical system also occupies a part of a volume of the safety helmet, and a part of an original internal collision protection design is sacrificed. Then, when the rider of the motorcycle replaces the transparent visor or the lens module, besides a complicated calibration is required to be performed on the transparent visor and the lens module, an assembling tolerance of assembling the same to the safety helmet has to be considered, so as to maintain the image display quality of the conventional head-mounted display. However, in a general case, the rider of the motorcycle cannot only replace one of the transparent visor and the lens module to calibrate the aberration, but the whole safety helmet is required to be replaced, which is lack of flexibility in usage.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention is directed to a head-mounted display, which has good display quality and a smaller volume.

Other objects and advantages of the invention can be further illustrated by the technical features broadly embodied and described as follows.

In order to achieve one or a portion of or all of the objects or other objects, an embodiment of the invention provides a head-mounted display including a device body, an assembly and a projection device. The assembly includes a reflective surface, and is pivotally disposed on the device body. The projection device includes a liquid crystal lens element, and is disposed inside the device body, and is adapted to project an image beam to the reflective surface of the assembly. The assembly reflects a portion of the image beam to a projection target. The projection device uses the liquid crystal lens element to calibrate an aberration generated from the reflective surface of the assembly.

According to the above descriptions, the embodiment of the invention has at least one of the following advantages or effects. The head-mounted display of the invention is able to calibrate the aberration generated from the reflective surface of the assembly based on an optical adjustable characteristic of the liquid crystal lens element in the projection device, so as to achieve good display quality. The head-mounted display of the invention is avoided to use a complicated lens module or an off-axis optical system, so as to achieve a smaller volume without sacrificing the original safety design of the safety helmet.

Other objectives, features and advantages of the invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

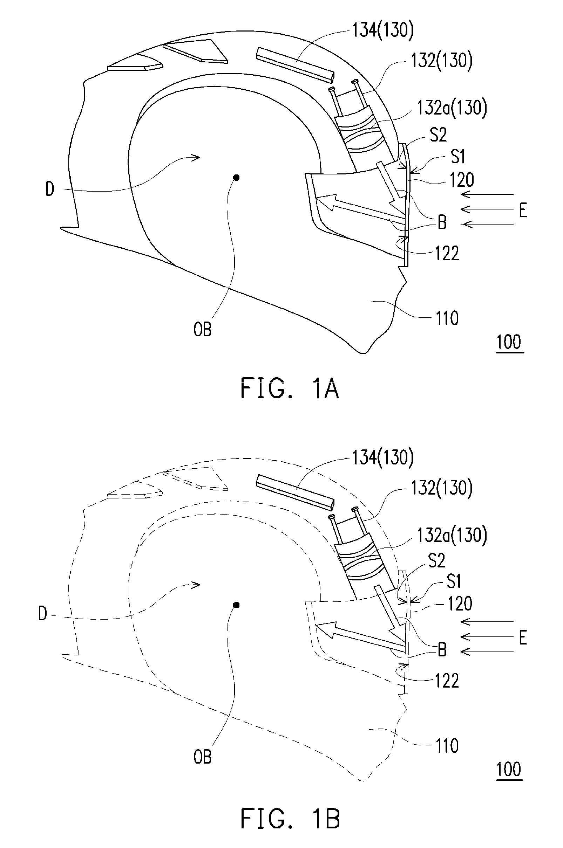

FIG. 1A and FIG. 1B are schematic diagrams of a head-mounted display according to an embodiment of the invention.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

FIG. 1A is a schematic diagram of a head-mounted display 100 according to an embodiment of the invention. Referring to FIG. 1A, the head-mounted display 100 includes a device body 110, an assembly 120 and a projection device 130. The assembly 120 includes a reflective surface 122, and the assembly 120 is pivotally disposed on the device body 110. The device body 110 and the assembly 120 are enclosed to form a space D therebetween, where the reflective surface 122 of the assembly 120 can be a plane or a curved surface. The projection device 130 includes a liquid crystal lens element 132a, and is disposed inside the device body 110 of the head-mounted display 100. Further, the projection device 130 is built in internal of the device body 110 and is adapted to project an image beam B through an opening of the device body110 (not shown) to the reflective surface 122 of the assembly 120. The assembly 120 reflects the image beam B to a projection target OB, where the projection target OB is located in the space D and is, for example, an eye of the user. The projection device 130 uses the liquid crystal lens element 132a to calibrate an aberration generated from the reflective surface 122 of the assembly 120. To be specific, the aberration generated from the reflective surface 122 refers to an aberration generated by the reflective surface 122, and the reflective surface 122 can be a plane or a curved surface. In the exemplary embodiment, the liquid crystal lens element 132a can be implemented through any liquid crystal lens element of the art, which is not limited by the invention. For example, the liquid crystal lens element 132a is, for example, a liquid crystal lens with a voltage-modulated focal length, and operation and implementation thereof can learn enough instructions and recommendations from general knowledge of the field, and details thereof are not repeated.

For example, in the embodiment, the head-mounted display 100 is, for example, a safety helmet. The device body 110 is, for example, a helmet body of the safety helmet. The assembly 120 is, for example, a transparent visor of the safety helmet for protecting a face of the user. The space D formed between the helmet body (device body 110) and the transparent visor (assembly 120) may accommodate the user's head (not shown), and provide a good protection to the user's head. In the embodiment, the projection device 130 is embedded in internal of an upper portion of the device body 110 (the helmet body), and the image beam B is projected downward to the reflective surface 122 of the assembly 120 (the transparent visor) from the upper portion of the device body 110. The upper portion of the device body 110 may be a portion the device body 110 located above the assembly. The transparent visor of the safety helmet is generally designed into a streamline shape suitable for resisting wind, and if the image beam B is not corrected and is projected to the reflective surface 122 also having the streamline shape, it is liable to produce an aberration, and the user may see a distorted image. Therefore, the head-mounted display 100 calibrates the aberration generated by the reflective surface 122 through the liquid crystal lens element 132a, so as to provide good image quality.

In order to clearly represent the head-mounted display 100 of the embodiment, the projection device 130 is drawn by solid lines in FIG. 1B, and the device body 110 and the assembly 120 are drawn by dash lines. Referring to FIG. 1B, in the embodiment, the assembly 120 is a beam combiner with a partial transmission and partial reflection function, which is configured to combine the image beam B and an environment beam E, and the combination beam of the image beam B and the environment beam E is projected to the projection target OB in the space D. In other words, a visual effect for the user of the head-mounted display 100 of the embodiment is seeing-through, i.e. the user may simultaneously view the image content provided by the image beam B and a background environment provided by the environment beam E. The assembly 120 has a first side S1 and a second side S2 opposite to the first side S1. Namely, the first side S1 of the assembly 120 is configured to face towards the exterior of the device body 110, and the second side S2 of the assembly 120 is configured to face towards the interior of the device body 110. The reflective surface 122 of the assembly 120 is located at the second side S2 facing towards the projection target OB. The image beam B is projected from the projection device 130 towards the reflective surface 122 located at the second side S2 and a portion of the image beam B is reflected by the reflective surface 122 to the projection target OB. The environment beam B penetrates the assembly 120 from the first side S1 to the second side S2 and combines with the portion of the image beam B reflected by the reflective surface 122. It should be noted that an image contained in the image beam B is displayed in front of the assembly 120 and the user can view the image forwardly to the exterior of the device body 110. The image is a virtual image. Therefore, the user may see the image content of the virtual image which is overlapped with the environmental conditions or road conditions.

To be specific, the projection device 130 of the embodiment includes a lens module 132, a control module 134 and an image source (not shown), where the lens module 132 includes the liquid crystal lens element 132a, and the control module 134 is electrically connected to the liquid crystal lens element 132a of the lens module 132, and the image source emits the image beam B. The lens module 132 is disposed on an optical transmission path of the image beam B, and the lens module 132 may include a plurality of lenses (not numbered) for downwardly projecting the image beam B to the reflective surface 122 of the assembly 120. In other embodiments, the lens module may include a plurality of liquid crystal lens elements, by which the amount of other lenses can be decreased, so as to achieve an effect of aberration calibration. The image content of the image beam B can be information content on a dashboard of the motorcycle which the user rides, information content preset by the user or other information content, which is not limited by the invention. Then, the head-mounted display 100 further includes an input interface (not shown), and the input interface is electrically connected to the control module 134. The user may send a command for adjusting a lens parameter of the liquid crystal lens element 132a to the control module 134 through the input interface, and the control module 134 changes the lens parameter (for example, a refractive index of the lens, though the invention is not limited thereto) of the liquid crystal lens element 132a, so as to calibrate the aberration generated by other lenses in the lens module 132 and the aberration generated by the reflective surface 122of the assembly 120. In brief, the user may dynamically correct the aberration according to an actual requirement, so as to achieve a most suitable image quality. For example, when the assembly 120 is pivotally moved relative to the device body 110, the user may adjust the lens parameter of the liquid crystal lens element 132a through the input interface, so as to calibrate the aberration generated by the reflective surface 122 of the pivoted assembly 120. And the assembly 120 may be adjusted to different positions manually or automatically. Certainly, in the embodiment, the head-mounted display 100 may further include suitable functional elements such as a computation module, a storage module, a communication module, a power module, etc., which is not limited by the invention.

It should be noted that the head-mounted display 100 of the embodiment is able to calibrate the aberration generated from the reflective surface 122 of the assembly 120 based on an adjustable characteristic of the liquid crystal lens element 132. Since the assembly 120, the projection device 130 and the device body 110 have an assembling tolerance, the aberration caused by the assembling tolerance generated due to the assembling process can also be calibrated based on the optical adjustable characteristic of the liquid crystal lens element 132 without changing the whole head-mounted display 100 (for example, the safety helmet), so that usage flexibility is improved. For example, if the user replaces the assembly 120, an aberration caused by a new assembling tolerance formed between the new assembly 120 and the device body 110 can also be calibrated by adjusting the liquid crystal lens element 132a. Therefore, besides the images formed by the head-mounted display 100 have good display quality, the head-mounted display 100 is also avoided to use a complicated lens module or an off-axis optical system, so as to achieve a smaller volume without sacrificing the original safety design of the safety helmet.

In summary, the embodiment of the invention has at least one of following advantages or effects. The head-mounted display of the invention is able to calibrate the aberration generated from the reflective surface of the assembly or the aberration generated due to the assembling tolerance of the assembly, the projection device and the device body based on an optical adjustable characteristic of the liquid crystal lens element in the projection device, so as to achieve good display quality. The user may dynamically adjust the lens parameter of the liquid crystal lens element through the input interface without replacing the whole safety helmet, so as to improve usage convenience and flexibility. Moreover, the head-mounted display of the invention is avoided to use a complicated lens module or an off-axis optical system, so as to achieve a smaller volume without sacrificing the original safety design of the safety helmet. In the head-mounted display of the invention, the assembly is used to combine the image beam and the environment beam without additionally configuring an image combiner between the user's eye and the assembly, so as to improve the safety of the safety helmet.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A head-mounted display, comprising:
a device body;
an assembly, pivotally disposed on the device body, and comprising a reflective surface; and
a projection device, disposed inside the device body, adapted to project an image beam to the reflective surface of the assembly, and the assembly reflecting a portion of the image beam to a projection target,
wherein the projection device comprises a liquid crystal lens element, and the projection device uses the liquid crystal lens element to calibrate an aberration generated from the reflective surface of the assembly.

2. The head-mounted display as claimed in claim 1, wherein the assembly is a beam combiner with a partial transmission and partial reflection function, and is configured to combine the portion of the image beam and an environment beam to transmit the portion of the image beam and the environment beam to the projection target.

3. The head-mounted display as claimed in claim 2, wherein the assembly has a first side and a second side opposite to the first side, the second side of the assembly faces towards the projection target, and the environment beam penetrates the assembly from the first side to the second side.

4. The head-mounted display as claimed in claim 3, wherein the projection device projects the image beam to the reflective surface of the assembly, so as to display an image in front of the assembly, wherein the image is a virtual image.

5. The head-mounted display as claimed in claim 1, wherein the reflective surface of the assembly is a plane or a curved surface.

6. The head-mounted display as claimed in claim 1, wherein the assembly, the projection device and the device body have an assembling tolerance, and the projection device uses the liquid crystal lens element to calibrate the aberration generated from the assembling tolerance.

7. The head-mounted display as claimed in claim 1, wherein the projection device comprises a lens module adapted to project the image beam to the assembly, and the lens module comprises the liquid crystal lens element.

8. The head-mounted display as claimed in claim 1, wherein the head-mounted display is a safety helmet, the device body is a helmet body of the safety helmet, and the assembly is a transparent visor of the safety helmet.

9. The head-mounted display as claimed in claim 1, wherein the projection device is embedded in the device body, and the projection device projects the image beam downward to the reflective surface of the assembly.
